# EUROPÄISCHE PATENTANMELDUNG

(11) **EP 0 740 137 A1**
(43) Veröffentlichungstag der Anmeldung: **30.10.1996**
(21) Anmeldenummer: 95105852.8
(22) Anmeldetag: 19.04.1995
(51) Int. Cl.: G01L 1/14, G01L 1/24

(54) **Kraftaufnehmer**

(71) Anmelder: CARL SCHENCK AG, D-64293 Darmstadt (DE)
(72) Erfinder: Giesecke, Peter, Prof., D-65205 Wiesbaden (DE); Polansky-Schmülling-Ziegert, Lubomir, D-69502 Hemsbach (DE); Schultheis, Werner, D-55129 Mainz (DE)
(74) Vertreter: Sievers, Uwe

(57) **Zusammenfassung**

Bei einem Kraftaufnehmer, bestehend aus einem Krafteinleitungselement (1), einem Kraftaufnahmeelement (2) und einem zwischen diesen angeordneten Verformungskörper (3), der mit Wegaufnehmern (9, 10) verbunden ist, haben die Stellen zur Kraftübertragung zwischen dem Krafteinleitungselement (1) und dem Verformungskörper (3) einerseits und zwischen dem Verformungskörper (3) und dem Kraftaufnahmeelement (2) andererseits einen vergleichsweise geringen Abstand (a) voneinander und die Wegaufnehmer (9, 10) sind an einer Stelle (8) des Verformungskörpers (3)angeordnet, die sich in einem vergleichsweise großen Abstand (b) von den Stellen zur Kraftübertragung befindet. Hierdurch wird bei geringem Verformungsweg ein großer Meßweg und dementsprechend eine große Auflösung erzielt.

## Beschreibung

Die Erfindung betrifft einen Kraftaufnehmer mit einem Krafteinleitungselement, einem Kraftaufnahmeelement und einem zwischen diesen angeordneten Verformungskörper, der mit einem Wegaufnehmer verbunden ist.

Kraftaufnehmer der angegebenen Art sind beispielsweise aus der DE 37 14 613 A1 und der EP 02 27 850 A1 bekannt. Bei den bekannten Kraftaufnehmern sind zur Messung des Verformungswegs auf dem als Biegebalken oder Ring ausgebildeten Verformungskörper Dehnungsmeßstreifen angebracht. Durch eine Belastung werden die die Dehnungsmeßstreifen tragenden Flächen der Verformungskörper gedehnt oder gestaucht, wodurch sich der elektrische Widerstand der Dehnungsmeßstreifen ändert. Die Dehnungsmeßstreifen sind zu einer Meßbrücke verschaltet, die ein der Widerstandsänderung und damit dem Verformungsweg des Verformungskörpers proportionale Spannungsänderung erzeugt. In der Regel werden bei derartigen Kraftaufnehmern mit Verformungswegen des Verformungskörpers von ca. 0,2 mm ausreichende Empfindlichkeiten und Auflösungen des Meßsignals erreicht. Aufgrund der geringen Wegänderungen haben Kraftaufnehmer oder Wägezellen mit Dehnungsmeßstreifen eine hohe Eigenfrequenz.

Der Erfindung liegt die Aufgabe zugrunde, einen Kraftaufnehmer der eingangs genannten Art zu schaffen, der für Wegaufnehmer geeignet ist, die auf einem anderen physikalischen Wegmeßprinzip beruhen als Dehnungsmeßstreifen und der sich durch eine hohe Eigenfrequenz und eine hohe Auflösung auszeichnet.

Diese Aufgabe wird erfindungsgemäß dadurch gelöst, daß die Stellen zur Kraftübertragung zwischen dem Krafteinleitungselement und dem Verformungskörper einerseits und zwischen dem Verformungskörper und dem Kraftaufnahmeelement andererseits einen vergleichsweise geringen Abstand voneinander haben und daß der Wegaufnehmer an einer Stelle des Verformungskörpers, insbesondere in seiner Mitte angeordnet ist, die sich in einem vergleichsweise großen Abstand von den Stellen zur Kraftübertragung befindet.

Bei dem erfindungsgemäßen Kraftaufnehmer ist der Verformungsweg des Verformungskörpers an der Meßstelle, an der sich der Wegaufnehmer befindet, erheblich größer, als an den Stellen die der Kraftübertragung dienen. Auf diese Weise läßt sich ein geringer Verformungsweg zwischen Krafteinleitungselement und Kraftaufnahmeelement erzielen, wodurch die Forderung nach hoher Eigenfrequenz erfüllt wird. Daneben wird durch die wegübersetzende Wirkung des Verformungskörpers der Meßweg im Bereich des Wegaufnehmers so groß gehalten, daß auch mit Wegaufnehmern, die eine geringere Empfindlichkeit als Dehnungsmeßstreifen haben, eine hohe Auflösung von bis zu 500.000 Teilen und mehr erreicht wird. Der erfindungsgemäße Kraftaufnehmer eignet sich daher in besonderem Maße für Windkanalwaagen, die Kraftaufnehmer mit hoher Auflösung und hoher Eigenfrequenz benötigen.

Nach einem weiteren Vorschlag der Erfindung sind das Krafteinleitungselement und das Kraftaufnahmeelement mit dem Verformungskörper durch dünnwandige, in Kraftrichtung verlaufende Stege oder Wände verbunden. Weiterhin können das Krafteinleitungselement, der Verformungskörper und das Kraftaufnahmeelement aus einem Teil bestehen. Eine vorteilhafte Ausgestaltung des Kraftaufnehmers als Wägezelle kann weiterhin dadurch erreicht werden, daß das Krafteinleitungselement, der Verformungskörper und das Kraftaufnahmeelement rotationssymmetrisch ausgebildet und koaxial nebeneinander angeordnet sind.

Die Wegmessung kann bei dem erfindungsgemäßen Kraftaufnehmer durch induktive, kapazitive oder optische Wegaufnehmer erfolgen. Als optische Wegaufnehmer kommen vorzugsweise Laserinterferometer in Betracht. Zur Vermeidung thermischer Einflüsse kann nach einem weiteren Vorschlag der Erfindung auf beiden Seiten des Verformungskörpers in symmetrischer Anordnung je ein Wegaufnehmer angeordnet sein, wobei beide Wegaufnehmer von einem gemeinsamen Träger gehalten sind, der an dem Kraftaufnahmeelement oder an dem Krafteinleitungselement befestigt ist und wobei die Meßwerte beider Wegaufnehmer miteinander verglichen, beispielsweise voneinander subtrahiert werden.

Die Erfindung wird nachfolgend anhand eines Ausführungsbeispiels näher erläutert, das in der Zeichnung dargestellt ist. Es zeigen
- Figur 1: einen Längsschnitt durch einen erfindungsgemäßen Kraftaufnehmer und
- Figur 2: eine schematische Darstellung der Kraftverhältnisse und der Verformungswege bei dem Kraftaufnehmer gemäß Figur 1.

Der dargestellte Kraftaufnehmer besteht aus einem Krafteinleitungselement 1, einem Kraftaufnahmeelement 2 und einem Verformungskörper 3, die aus einem einstückigen Materialblock herausgearbeitet sind. Das Krafteinleitungselement 1 und das Kraftaufnahmeelement 2 haben die Form von Ringen. Ihre einander zugekehrten Stirnseiten werden von entgegengesetzt geneigten Kegelflächen 41, 42 bzw. 51, 52 begrenzt, an die sich an der Stelle ihres geringsten Abstands jeweils ein dünnwandiger, zylindrischer Ringsteg 6, 7 anschließt. Durch die Ringstege 6, 7 sind die Elemente 1, 2 mit dem als kreisscheibenförmige Membran ausgebildeten Verformungskörper 3 verbunden, der sich in einer zur gemeinsamen Mittelachse der Ringstege 6, 7 und der Elemente 1, 2 senkrechten Ebene erstreckt. Der an dem Krafteinleitungselement 1 angeordnete Ringsteg 6 hat einen geringeren Durchmesser, als der an dem Kraftaufnahmeelement 2 angeordnete Ringsteg 7. Der Durchmesserunterschied ist mit a bezeichnet.

Die Mitte des Verformungskörpers bildet eine Meßstelle 8. Dort ist der Verformungskörper 3 mit zwei Wegaufnehmern 9, 10 verbunden, die in symmetrischer Anordnung beiderseits des Verformungskörpers angeordnet sind. Die Wegaufnehmer 9, 10 sind durch zwei Stifte 11 eines gemeinsamen Trägers 12 miteinander verbunden, der an dem Kraftaufnahmeelement 2 befestigt ist. Die Stifte erstrecken sich durch Öffnungen 13, die beiderseits der Meßstelle 8 im Verformungskörper 3 vorgesehen sind. Der Abstand der Meßstelle 8 von dem Ringsteg 6 ist mit b bezeichnet.

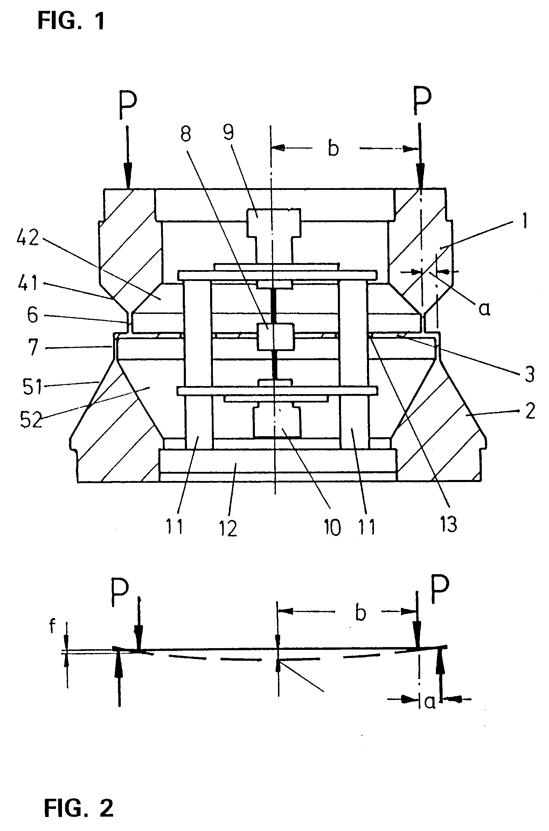

Figur 2 veranschaulicht die Wirkungsweise des beschriebenen Kraftaufnehmers. Wird eine Kraft P über das Krafteinleitungselement 1 in den Kraftaufnehmer eingeleitet, so wird der Verformungskörper 3 infolge des Durchmesserunterschieds a zwischen den Ringstegen 6, 7 verformt. Für die Größe der Verformung ist neben dem Maß a vor allem der Durchmesser des Verformungskörpers 3 und seine Wandstärke maßgebend. Je nach Dimensionierung des Verformungskörpers 3 und eingeleiteter Kraft ergibt sich an der durch den Ringsteg 6 gebildeten Krafteinleitungsstelle ein Verformungsweg von von der Größe f. Entsprechend dem das Maß a um ein Mehrfaches übersteigenden Abstand b wird der Verformungskörper 3 an der Meßstelle 8 in seiner Mitte um ein Mehrfaches der Größe f verformt. Den Wegaufnehmern 9, 10 steht als Meßweg daher der mehrfache Betrag des an dem Krafteinleitungselement 1 auftretenden Verformungswegs zur Verfügung, wodurch die angestrebte hohe Auflösung bei geringem Verformungsweg erzielt wird.

Je nach Belastung und gewünschter Durchbiegung kann die Dicke des Verformungskörpers 3 sowie der Durchmesser der ringförmigen Krafteinleitungsstelle variiert werden.

Wenngleich die beschriebene, ringförmige Ausgestaltung des Kraftaufnehmers viele Vorteile hat, so ist diese Form keineswegs zwingend. Hiervon abweichend kann der Kraftaufnehmer auch als Balken auf zwei Stützen mit zwei außermittigen Krafteinleitungen oder als ein einseitig eingespannter Balken ausgebildet sein.

Der beschriebene Kraftaufnehmer ist druckkompensiert und kann auch im Überdruckbereich eingesetzt werden. Durch die beschriebene Verwendung von zwei Wegaufnehmern können thermische Effekte durch Differenzmessung kompensiert werden.

## Patentansprüche

1. Kraftaufnehmer mit einem Krafteinleitungselement, einem Kraftaufnahmeelement und einem zwischen diesen angeordneten Verformungskörper, der mit einem Wegaufnehmer verbunden ist, **dadurch gekennzeichnet**, daß die Stellen zur Kraftübertragung zwischen dem Krafteinleitungselement (1) und dem Verformungskörper (3) einerseits und zwischen dem Verformungskörper (3) und dem Kraftaufnahmeelement (2) andererseits einen vergleichsweise geringen Abstand (a) voneinander haben und daß der Wegaufnehmer (9, 10) an einer Stelle (8) des Verformungskörpers (3), insbesondere in seiner Mitte angeordnet ist, die sich in einem vergleichsweise großen Abstand (b) von den Stellen zur Kraftübertragung befindet.

2. Kraftaufnehmer nach Anspruch 1, dadurch gekennzeichnet, daß das Krafteinleitungselement (1) und das Kraftaufnahmeelement (2) mit dem Verformungskörper (3) durch dünnwandige, in Kraftrichtung verlaufende Stege (6, 7) oder Wände verbunden sind.

3. Kraftaufnehmer nach einem der Ansprüche 1 oder 2, dadurch gekennzeichnet, daß das Krafteinleitungselement (1), der Verformungskörper (3) und das Kraftaufnahmeelement (2) aus einem Teil bestehen.

4. Kraftaufnehmer nach Anspruch 3, dadurch gekennzeichnet, daß das Krafteinleitungselement (1), der Verformungskörper (3) und das Kraftaufnahmeelement (2) rotationssymmetrisch ausgebildet und koaxial nebeneinander angeordnet sind.

5. Kraftaufnehmer nach einem der vorhergehenden Ansprüche, dadurch gekennzeichnet, daß die Wegmessung durch induktive, kapazitive oder optische Wegaufnehmer (9, 10), beispielsweise Laserinterferometer erfolgt.

6. Kraftaufnehmer nach einem der vorhergehenden Ansprüche, dadurch gekennzeichnet, daß auf beiden Seiten des Verformungskörpers (3) in symmetrischer Anordnung je ein Wegaufnehmer (9, 10) angeordnet ist, wobei beide Wegaufnehmer (9, 10) von einem gemeinsamen Träger (11, 12) gehalten sind, der an dem Kraftaufnahmeelement (2) oder an dem Krafteinleitungselement (2) befestigt ist und daß die Meßwerte beider Wegaufnehmer (9, 10) miteinander verglichen, beispielsweise voneinander subtrahiert werden.
